# EUROPÄISCHE PATENTSCHRIFT

(11) **EP 2 194 253 B1**
(45) Veröffentlichungstag und Bekanntmachung des Hinweises auf die Patenterteilung: **20.11.2013**
(21) Anmeldenummer: 09177837.3
(22) Anmeldetag: 03.12.2009
(51) Int. Cl.: F02B 27/02, F02D 9/10

(54) **Saugrohreinrichtung**
Suction tube device
Installation de conduite d'aspiration

(30) Priorität: 04.12.2008 DE 102008060235
(43) Veröffentlichungstag der Anmeldung: 09.06.2010
(73) Patentinhaber: MANN + HUMMEL GMBH, 71638 Ludwigsburg (DE)
(72) Erfinder: Teschner, Matthias, 71636, Ludwigsburg (DE); Shen, Naihe, 70736, Fellbach (DE)

(56) Entgegenhaltungen:
- DE-A1- 4 243 134
- DE-A1- 19 714 311
- US-A1- 2005 224 037
- US-A1- 2007 017 469

## Beschreibung

### Technisches Gebiet

Die Erfindung bezieht sich auf eine Saugrohreinrichtung im Ansaugtrakt einer Brennkraftmaschine nach dem Oberbegriff des Anspruches 1.

### Stand der Technik

Aus der US 2007/0017469 A1 ist eine Saugrohranlage mit einer Klappenanordnung bekannt, bei der Lagerbuchsen entlang der Klappenwelle zur Reibungsreduzierung und Absorption von Schwingungen angeordnet sind. Aus der DE 42 28 334 A1 ist eine Saugrohranlage für eine Mehrzylinder-Brennkraftmaschine bekannt, die in einem Gehäuse eine den Zylindern entsprechende Anzahl an Saugrohren aufweist, denen jeweils eine Schwenkklappe zugeordnet ist. Über die Schwenkklappen ist der Querschnitt der Saugrohre variabel einzustellen. Die Schwenkklappen sind an einer gemeinsamen Stellwelle angeordnet, die drehbar im Gehäuse der Saugrohranlage gelagert ist. Bei einer rotatorischen Stellbewegung der Stellwelle werden die Schwenkklappen zwischen einer geschlossenen und einer geöffneten Position verschwenkt.

Grundsätzlich kommt bei derartigen Schwenkklappen entweder eine exzentrische oder eine zentrische Lagerung in Betracht. Bei der exzentrischen Lagerung verläuft die Stellwelle außerhalb des Mittelpunktes der Schwenkklappe, bei der zentrischen Lagerung ist die Stellwelle durch den Mittelpunkt geführt. Die exzentrische Lagerung hat den Vorteil, dass im geöffneten Klappenzustand die Strömung durch die Schwenkklappe nur sehr gering beeinträchtigt wird. Allerdings können bei exzentrisch gelagerten Klappen verhältnismäßig hochfrequente, von der aktuellen Motordreh-zahl abhängige Schwingungen in den Klappen entstehen, die die Strömung und das Drehmoment ungünstig beeinflussen.

Die zentrischen Klappen befinden sich im geöffneten Zustand nahezu im Momentengleichgewicht, so dass die Klappen im geöffneten Zustand ihre Position halten und die Gefahr, dass die Schwenkklappen in Schwingungen geraten, erheblich reduziert ist. Andererseits liegen zentrisch gelagerte Schwenkklappen in der Strömung und beeinflussen diese in negativer Weise.

Der Erfindung liegt die Aufgabe zugrunde, mit einfachen konstruktiven Maßnahmen eine Saugrohreinrichtung anzugeben, bei der die Strömung in geringstmöglichem Maße durch die Schwenkklappen beeinträchtigt wird und ein Aufschwingen der Schwenkklappen verhindert oder zumindest reduziert ist.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Saugrohreinrichtung bzw. -anlage befindet sich im Ansaugtrakt einer Brennkraftmaschine und dient zur Zufuhr von Verbrennungsluft zu den Zylindern der Brennkraftmaschine. Die Saugrohreinrichtung besteht vorzugsweise aus Kunststoff und wird insbesondere im Kunststoff-Spritzgussverfahren hergestellt und ist als vorgefertigtes Modul ausgebildet, das in den Ansaugtrakt eingesetzt werden kann.

Die Saugrohreinrichtung umfasst eine Mehrzahl von Saugrohren, denen mindestens eine verstellbare Schaltklappe zur Beeinflussung der Strömung durch die Saugrohre zugeordnet ist. Um ein Aufschwingen der Schaltklappe insbesondere durch die vorbeiströmende Verbrennungsluft zu verhindern, die die Schaltklappe zu Schwingungen anregt, ist erfindungsgemäß ein Schwingungsreduzierungselement vorgesehen, welches an der Schaltklappe oder einem mit der Schaltklappe verbundenen Bauteil angeordnet ist und den Schwingungen der Schaltklappe entgegenwirkt. Mithilfe des Schwingungsreduzierungselementes wird ein Aufschwingen der Schaltklappe unterbunden oder zumindest reduziert, so dass auch die Strömung durch die Saugrohre nicht oder nicht im wesentlichen Maße beeinträchtigt wird.

Die Schwingungsreduzierung mithilfe des Schwingungsreduzierungselementes kann auf verschiedene Weisen erzielt werden. Gemäß einer ersten vorteilhaften Ausführung ist vorgesehen, dass das Schwingungsreduzierungselement als ein Dämpfungselement ausgebildet ist, welches die Schwingung der Schaltklappe dämpft. Hier kommen insbesondere viskose Schwingungsdämpfer in Betracht, die jeder Schwingbewegung der Schaltklappe entgegenwirken. Möglich sind aber auch sonstige Dämpferarten, beispielsweise ein Koppeln der Schaltklappe mit einem aus dämpfendem Material bestehenden Schwingungsreduzierungselement, bei dem die Bewegungsenergie der Schaltklappe durch die Kompression des Materials des Schwingungsreduzierungselementes dissipiert wird, oder Reibungsdämpfer oder dergleichen.

Das Dämpfungselement wirkt zwischen der Schaltklappe und einem gehäusefesten Bauteil, gegenüber dem die Schaltklappe die Stellbewegung ausübt. Gemäß einer bevorzugten Ausführung befindet sich die mindestens eine Schaltklappe auf einer Stellwelle, die im Gehäuse verstellbar gelagert ist, wobei in diesem Fall das Dämpfungselement zweckmäßigerweise an der Stellwelle angeordnet ist bzw. die dämpfende Wirkung auf die Stellwelle ausübt, insbesondere im Bereich der Lagerung der Stellwelle im Gehäuse.

Das Dämpfungselement ist vorteilhafterweise so ausgelegt, dass eine Dämpfung nur bei verhältnismäßig hochfrequenten Schwingungen wirksam wird, jedoch nicht oder nur in reduziertem Maße bei der Stellbewegung, welche die Schaltklappe zwischen ihren Stellpositionen ausführt.

Die an der Stellwelle gehaltene Schaltklappe übt insbesondere eine rotatorische Schwenkbewegung aus, wobei im Rahmen der Erfindung grundsätzlich auch eine translatorische Bewegung oder eine gemischt translatorisch-rotatorische Stellbewegung in Betracht kommt. Die Schwenk- bzw. Drehbewegung wird durch eine drehbare Lagerung der Stellwelle im Gehäuse realisiert, die von einem Aktuator um die Rotationsachse zu verschwenken ist. Die Dämpfungselemente sind dementsprechend als Drehdämpfer ausgeführt.

Erfindungsgemäß ist das Schwingungsreduzierungselement als ein Zusatzmassenelement ausgebildet, welches fest mit der Schaltklappe oder einem mit der Schaltklappe verbundenen Bauteil verbunden ist und die gleiche Bewegung wie die Schaltklappe bzw. das mit der Schaltklappe verbundene Bauteil ausübt. Über das Zusatzmassenelement wird eine Erhöhung des Massenträgheitsmomentes der Schaltklappe bzw. des Schaltklappen-Stellwellen-Systems erreicht, wobei das erhöhte Massenträgheitsmoment einer Schwingungsanregung im hochfrequenten Schwingungsbereich entgegensteht, so dass die Schaltklappe keine hochfrequenten Schwingungen ausübt bzw. nur in reduziertem Maße derartige Schwingungen ausführt. Zwar steht das erhöhte Massenträgheitsmoment auch der regulären Stellbewegung der Schaltklappe entgegen; dies kann jedoch entweder durch eine erhöhte Stellkraft bzw. ein Stellmoment oder durch eine verlangsamte Stellbewegung kompensiert werden.

Das Zusatzmassenelement ist gemäß einer bevorzugten Ausführung mit Abstand zur Drehachse an der Schaltklappe oder einem mit der Schaltklappe verbundenen Bauteil angeordnet. Da die Höhe des Massenträgheitsmomentes quadratisch vom Abstand zur Drehachse abhängt, können bereits verhältnismäßig geringe Massenelemente an der Schaltklappe zu einer signifikanten Erhöhung des Gesamtmassenträgheitsmomentes führen.

Gemäß einer weiteren vorteilhaften Ausführung ist das Zusatzmassenelement als ein Schwungrad ausgebildet, das mit der Stellwelle verbunden ist. Das Schwungrad stellt eine verhältnismäßig große Drehmasse dar, die bei einer rotatorischen Stellbewegung der Stellwelle mit beschleunigt werden muss und hochfrequenten Schwingungsanregungen entgegenwirkt.

Gegebenenfalls kommt eine Kombination von Dämpfungselement und Zusatzmassenelement in Betracht, wodurch eine besondere effektive Schwingungsdämpfung bzw. -reduzierung gegeben ist.

Die Schaltklappe ist in bevorzugter Ausführung exzentrisch gelagert, also außerhalb ihres Mittelpunktes, da derartige Schaltklappen im geöffneten Zustand die Strömung durch das Saugrohr nicht beeinträchtigen. Grundsätzlich kommt aber auch eine Anwendung auf symmetrisch gelagerte Schaltklappen in Betracht.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch eine Saugrohreinrichtung, welche im Ansaugtrakt einer Brennkraftmaschine angeordnet ist, mit einem Saugrohr zur Zufuhr von Verbrennungsluft zu einem Zylinder der Brennkraftmaschine, wobei dem Saugrohr ein Zusatzrohr zugeordnet ist und im Mündungsbereich des Zusatzrohres in das Saugrohr eine exzentrisch gelagerte Schaltklappe angeordnet ist,

Fig. 2 eine Fig. 1 entsprechende Darstellung, jedoch die Schaltklappe in einer verschwenkten Position,

Fig. 3 und 4 ein weiteres Ausführungsbeispiel einer Saugrohreinrichtung, das analog zu den Figuren 1 und 2 aufgebaut ist, jedoch mit einer symmetrisch gelagerten Schaltklappe,

Fig. 5 eine Darstellung einer Stellwelle mit vier daran angeordneten Schaltklappen, wobei im Bereich der Lagerstellen der Stellwelle Dämpfungselemente angeordnet sind,

Fig. 6 ein weiteres Ausführungsbeispiel einer Stellwelle mit vier daran angeordneten Schaltklappen, die in ihrem stirnseitigen Bereich jeweils ein Zusatzmassenelement tragen,

Fig.7 eine Stellwelle mit daran angeordneten Schaltklappen und einem zusätzlichen Schwungrad an der Stellwelle.

In den Figuren sind gleiche Bauteile mit gleichen Bezugszeichen versehen.

### Ausführungsformen der Erfindung

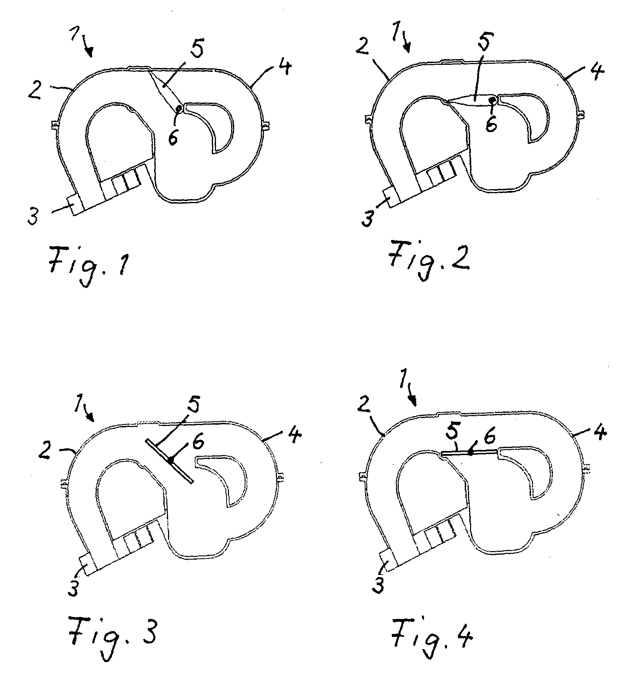

In den Figuren 1 und 2 ist eine Saugeinrichtung 1 dargestellt, die im Ansaugtrakt einer Brennkraftmaschine angeordnet ist und über die den Zylindern einer Brennkraftmaschine Verbrennungsluft zuzuführen ist. Die Saugrohrverbindung 1 umfasst in einem Gehäuse ein Saugrohr 2, welches über einen Flansch 3 an der Brennkraftmaschine zu befestigen ist. In der Saugrohreinrichtung 1 befindet sich eine Schaltklappe 5, die mittels einer Stellwelle 6, die Träger der Schaltklappe 5 ist, zwischen den in Fig. 1 und Fig. 2 dargestellten Schaltpositionen zu verschwenken ist. Die Stellwelle 6 ist mithilfe eines Aktuators um eine Rotationsachse zu verdrehen. Die Schaltklappe 5 ist exzentrisch gelagert, was dadurch realisiert ist, dass die Stellwelle 6 außerhalb des Mittelpunktes durch die Schaltklappe 5 verläuft.

In der Saugrohreinrichtung 1 befindet sich ein Zusatzrohr 4, welches in das Saugrohr 2 mündet, wobei die Schaltklappe 5 im Mündungsbereich des Zusatzrohrs 4 in das Saugrohr 2 angeordnet ist. In Fig. 1 befindet sich die Schaltklappe 5 in der geschlossenen Position, in der das Zusatzrohr 4 über die Schaltklappe 5 von dem Saugrohr 2 getrennt ist. In Fig. 2 ist die Schaltklappe 5 in einer geöffneten Position dargestellt, in der der Mündungsbereich des Zusatzrohrs 4 in das Saugrohr 2 geöffnet ist; zugleich ist ein unmittelbarer Strömungsübertritt von einem stromauf liegenden Abschnitt des Saugrohres 2 in den Abschnitt unmittelbar benachbart zum Flansch 3 verschlossen.

In Fig. 3 und 4 ist eine weitere Saugrohreinrichtung 1 dargestellt, deren Grundaufbau mit dem Ausführungsbeispiel gemäß Fig. 1 und 2 identisch ist. Die Schaltklappe 5 im Mündungsbereich des Zusatzrohres 4 zum Saugrohr 2 ist jedoch nicht exzentrisch, sondern symmetrisch bzw. zentrisch an der Stellwelle 6 gelagert, die als Stellbewegung eine Rotationsbewegung ausführen kann. Allerdings stellt die Schaltklappe 5 in der in Fig. 3 dargestellten Zwischenposition, in welcher eine Zuströmung von Verbrennungsluft sowohl über das Zusatzrohr 4 als auch über den stromauf gelegenen Abschnitt des Saugrohres 2 ermöglicht ist, ein im Strömungsweg liegendes Strömungshindernis dar, welches geeignet ist, die Strömungsführung durch die Saugrohreinrichtung 1 zu beeinträchtigen.

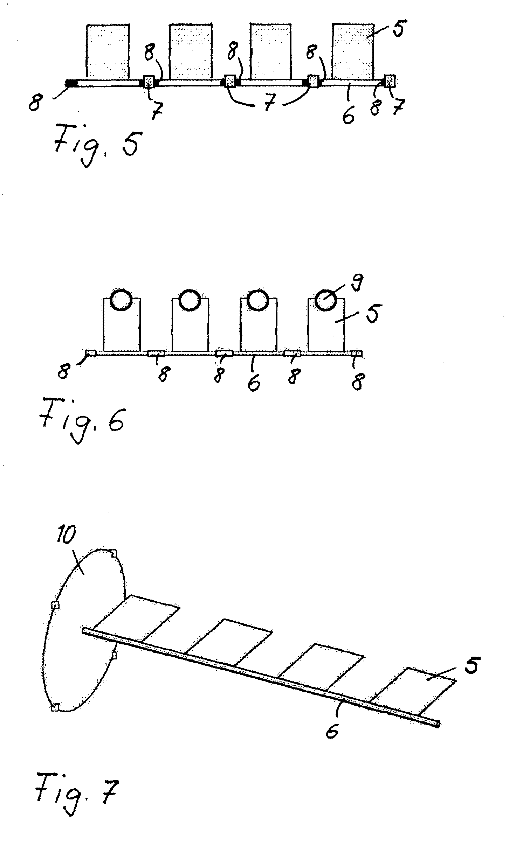

Im Ausführungsbeispiel gemäß Fig. 5 sind insgesamt vier Schaltklappen 5 an der Stellwelle 6 angeordnet, die um ihre Längsachse verdrehbar in mehreren axial beabstandeten Lagerstellen 8 im Gehäuse gelagert ist. Um hochfrequente Schwingungen zu dämpfen, sind an der Stellwelle 6 mehrere Dämpfungselemente 7 angeordnet, welche sich vorzugsweise an den Lagerstellen 8 befinden. Bei den Dämpfungselementen 7 handelt es sich um viskose Schwingungsdämpfer, die eine geschwindigkeitsabhängige Dämpfungswirkung entfalten. Gegebenenfalls kommen aber auch andere Dämpfungselemente in Betracht, beispielsweise Reibungsdämpfer oder Pufferelemente, welche aus nachgiebigem Material bestehen und eine Dämpfung durch Materialkompression bewirken. Die Dämpfungselemente 7 entfalten ihre Wirkung zwischen der Stellwelle 6 und dem Gehäuse, gegenüber dem die Stellwelle ihre Stellbewegung ausführt.

In Fig. 6 ist die Stellwelle 6 mit den vier Schaltklappen 5 in einer weiteren Ausführung dargestellt, gemäß der eine Mehrzahl von Zusatzmassenelementen 9 an jeder Schaltklappe 5 angeordnet sind. Die Zusatzmassenelemente 9 befinden sich jeweils im Bereich der freien Stirnseite auf der der Stellwelle 6 abgewandten Position an den Schaltklappen 5 und erhöhen auf diese Weise in signifikanter Weise das Trägheitsmoment jeder Schaltklappe 5 und damit auch des Gesamtsystems, bestehend aus der Stellwelle 6 und den insgesamt vier Schaltklappen 5. Jede der Schaltklappen 5 ist mit einem derartigen Massenelement 9 ausgestattet.

Im Ausführungsbeispiel gemäß Fig. 7 ist die Stellwelle 6 mit einem Zusatzmassenelement versehen, welches als Schwungrad 10 ausgebildet ist und im Bereich einer Stirnseite der Stellwelle 6 angeordnet ist. Das Schwungrad 6 bewirkt ebenfalls eine signifikante Erhöhung des Massenträgheitsmomentes des Gesamtsystems, bestehend aus Stellwelle 6 und den Schaltklappen 5.

Gegebenenfalls können an mehreren Steller der Stellwelle 6 derartige Schwungräder vorgesehen sein, beispielsweise an beiden axialen Stirnseiten der Stellwelle. Möglich ist auch eine Anordnung eines einzelnen Schwungrades im mittleren Abschnitt der Stellwelle. Außerdem ist auch eine Kombination von Schwungrad und einzelnen Zusatzmassenelementen an den Schaltklappen denkbar. Des Weiteren ist eine Kombination von Dämpfungselementen, beispielsweise viskosen Schwingungsdämpfern wie in Fig. 5 dargestellt, mit Zusatzmassenelementen gemäß Fig. 6 oder Fig. 7 möglich.

## Patentansprüche

1. Saugrohreinrichtung im Ansaugtrakt einer Brennkraftmaschine, mit einer Mehrzahl von Saugrohren (2), denen mindestens eine verstellbare Schaltklappe (5) zur Beeinflussung der Strömung durch die Saugrohre (2) zugeordnet ist, wobei an der Schaltklappe (5) oder an einem mit der Schaltklappe (5) verbundenen Bauteil (6) mindestens ein Schwingungsreduzierungselement (7, 9, 10) angeordnet ist, das Schwingungen der Schaltklappe (5) entgegenwirkt, **dadurch gekennzeichnet, dass** das Schwingungsreduzierungselement als ein Zusatzmassenelement (9) ausgeführt ist, welches fest mit der Schaltklappe (5) oder mit einem mit der Schaltklappe (5) verbundenen Bauteil (6) verbunden ist und die gleiche Bewegung wie die Schaltklappe (5) bzw. das mit der Schaltklappe (5) verbundene Bauteil ausübt.

2. Saugrohreinrichtung nach Anspruch 1, **dadurch gekennzeichnet, dass** das Schwingungsreduzierungselement als Dämpfungselement (7) ausgeführt ist, welches die Schwingbewegung der Schaltklappe (5) dämpft.

3. Saugrohreinrichtung nach Anspruch 2, **dadurch gekennzeichnet, dass** das Dämpfungselement (7) als viskoser Schwingungsdämpfer ausgeführt ist.

4. Saugrohreinrichtung nach Anspruch 1, **dadurch gekennzeichnet, dass** das Zusatzmassenelement (9) mit Abstand zur Drehachse an der Schaltklappe (5) angeordnet ist.

5. Saugrohreinrichtung nach einem der Ansprüche 1 bis 4, **dadurch gekennzeichnet, dass** das Schwingungsreduzierungselement (7, 10) an einer Stellwelle (6) angeordnet ist, an der die Schaltklappe (5) gehalten ist.

6. Saugrohreinrichtung nach Anspruch 5, **dadurch gekennzeichnet, dass** an der Stellwelle (6) mehrere Schwingungsreduzierungselemente (7, 10) angeordnet sind.

7. Saugrohreinrichtung nach Anspruch 5 oder 6, **dadurch gekennzeichnet, dass** an der Stellwelle (6) mehrere Schaltklappen (5) angeordnet sind, denen jeweils ein Schwingungsreduzierungselement (7, 9) zugeordnet ist.

8. Saugrohreinrichtung nach Anspruch 1 oder 4 und einem der Ansprüche 5 bis 7, **dadurch gekennzeichnet, dass** das Zusatzmassenelement (9) als ein mit der Stellwelle (6) verbundenes Schwungrad (10) ausgeführt ist.

9. Saugrohreinrichtung nach einem der Ansprüche 1 bis 8, **dadurch gekennzeichnet, dass** die Schaltklappe (5) schwenkbar gelagert ist.

10. Saugrohreinrichtung nach Anspruch 9, **dadurch gekennzeichnet, dass** die Schaltklappe (5) exzentrisch gelagert ist.

## Claims

1. Intake manifold means in the intake tract of an internal combustion engine, having a plurality of intake manifolds (2), to which at least one adjustable air flap (5) for influencing the flow through the intake manifolds (2) is allocated, at least one vibration reduction element (7, 9, 10), that counteracts vibrations of the air flap (5), being disposed on the air flap (5) or on a component (6) connected with the air flap (5), **characterized in that** the vibration reduction element is designed as additional mass element (9), which is firmly connected with the air flap (5) or with a component (6) connected with the air flap (5) and performs the same movement as the air flap (5) and/or the component connected with the air flap (5).

2. Intake manifold means according to claim 1, **characterized in that** the vibration reduction element is designed as damping device (7), which dampens the vibration movement of the air flap (5).

3. Intake manifold means according to claim 2, **characterized in that** the damping device (7) is designed as viscous vibration damper.

4. Intake manifold means according to claim 1, **characterized in that** the additional mass element (9) is disposed on the air flap (5) spaced away from the axis of rotation.

5. Intake manifold means according to one of the claims 1 to 4, **characterized in that** the vibration reduction element (7, 10) is disposed on an adjusting shaft (6), on which the air flap (5) is held.

6. Intake manifold means according to claim 5, **characterized in that** several vibration reduction elements (7, 10) are disposed on the adjusting shaft (6).

7. Intake manifold means according to claim 5 or 6, **characterized in that** on the adjusting shaft (6) several air flaps (5) are disposed, each of them being allocated a vibration reduction element (7, 9).

8. Intake manifold means according to claim 1 or 4 and to one of the claims 5 to 7, **characterized in that** the additional mass element (9) is designed as a flywheel (10) connected with the adjusting shaft (6).

9. Intake manifold means according to one of the claims 1 to 8, **characterized in that** the air flap (5) is pivotly supported.

10. Intake manifold means according to claim 9, **characterized in that** the air flap (5) is eccentrically supported.

## Revendications

1. Dispositif à tubes d'aspiration dans le canal d'aspiration d'un moteur à combustion interne, doté d'une pluralité de tubes d'aspiration (2) auxquels correspondent au moins un volet de commutation (5) réglable servant à influencer le flux traversant les tubes d'aspiration (2), au moins un élément réducteur d'oscillations (7, 9, 10) étant disposé sur le volet de commutation (5) ou sur un élément (6) relié au volet de commutation (5) afin de réduire les oscillations du volet de commutation (5), **caractérisé en ce que** l'élément réducteur d'oscillations est exécuté en tant qu'élément de masse supplémentaire (9) qui est relié de manière fixe au volet de commutation (5) ou à un élément (6) relié au volet de commutation (5) et décrit le même mouvement que le volet de commutation (5) et/ou l'élément relié au volet de commutation (5).

2. Dispositif à tubes d'aspiration selon la revendication 1, **caractérisé en ce que** l'élément réducteur d'oscillations est exécuté en tant qu'élément d'amortissement (7) qui amortit le mouvement d'oscillation du volet de commutation (5).

3. Dispositif à tubes d'aspiration selon la revendication 2, **caractérisé en ce que** l'élément d'amortissement (7) est exécuté en tant qu'amortisseur d'oscillations visqueux.

4. Dispositif à tubes d'aspiration selon la revendication 1, **caractérisé en ce que** l'élément de masse supplémentaire (9) est disposé sur le volet de commutation (5) à une certaine distance de l'axe rotatif.

5. Dispositif à tubes d'aspiration selon l'une des revendications 1 à 4, **caractérisé en ce que** l'élément réducteur d'oscillations (7, 10) est disposé sur un arbre de réglage (6) sur lequel est fixé le volet de commutation (5).

6. Dispositif à tubes d'aspiration selon la revendication 5, **caractérisé en ce que** plusieurs éléments réducteurs d'oscillations (7, 10) sont disposés sur l'arbre de réglage (6).

7. Dispositif à tubes d'aspiration selon la revendication 5 ou 6, **caractérisé en ce que** plusieurs volets de commutation (5) auxquels correspond respectivement un élément réducteur d'oscillations (7, 9) sont disposés sur l'arbre de réglage (6).

8. Dispositif à tubes d'aspiration selon la revendication 1 ou 4 et selon l'une des revendications 5 à 7, **caractérisé en ce que** l'élément de masse supplémentaire (9) est exécuté en tant que volant d'inertie (10) relié à l'arbre de réglage (6).

9. Dispositif à tubes d'aspiration selon l'une des revendications 1 à 8, **caractérisé en ce que** le volet de commutation (5) est logé de manière pivotante.

10. Dispositif à tubes d'aspiration selon la revendication 9, **caractérisé en ce que** le volet de commutation (5) est logé de manière excentrique.
